# EUROPEAN PATENT SPECIFICATION

(11) **EP 1 688 065 B1**
(45) Date of publication and mention of the grant of the patent: **12.11.2008**
(21) Application number: 05002493.4
(22) Date of filing: 07.02.2005
(51) Int. Cl.: A47C 7/46

(54) **Lumbar support device**
Lordosenstützvorrichtung
Dispositif de support lombaire

(43) Date of publication of application: 09.08.2006
(73) Proprietor: L&P Swiss Holding Company, 9303 Wittenbach (CH)
(72) Inventor: Pattyn, Jo, 8940 Geluwe-Wervik (BE); Catry, Pierrot, 8587 Spiere (BE)
(74) Representative: Banzer, Hans-Jörg

(56) References cited:
- US-A- 4 627 661
- US-B1- 6 402 246
- US-B1- 6 557 938

## Description

The present invention relates to a lumbar support device and, more specifically, to an adjustable lumbar support device for incorporation into a backrest of a seat, e. g. in a vehicle.

Various kinds of adjustable lumbar support devices are known in the art. For example, in US 5,988,745 a lumbar support device comprising a wire framework is disclosed. The wire framework essentially consists of two lateral side wires and a plurality of transverse wires. A Bowden cable arrangement is used for adjusting the degree of lumbar support provided by the device. For this purpose, U-shaped transverse wires are connected to the lateral side wires and the ends of a region to be arched by means of the Bowden cable. The Bowden cable connects the two U-shaped transverse wires and is operable so as to pull them towards each other, thereby arching the wire framework along a longitudinal direction. The wire framework is connected to the seat frame at locations essentially corresponding to the longitudinal position of the U-shaped transverse wires.

US 6,557,938 B1 discloses a lumbar support device which generally corresponds to the preamble of independent claim 1.

It is an object of the present invention to provide an adjustable lumbar support device which has a simplified structure and is easy to manufacture.

This object is achieved by a lumbar support device according to independent claim 1. The dependent claims define preferred and advantageous embodiments of the invention.

The lumbar support device of the present invention comprises a wire framework for incorporation into a seat frame. The wire framework has two lateral side wires and a plurality of transverse wires. An adjusting mechanism is provided for adjusting the degree of lumbar support provided by the lumbar support device. This means in particular that the wire framework, which preferably is configured to support upholstery of a seat, can at least in part be displaced along a direction essentially perpendicular to a support plane of the lumbar support device.

For this purpose, the adjusting mechanism comprises a first support means having a first connecting portion pivotably connected to one longitudinal side of the seat frame, a second connecting portion connected to one of the lateral side wires, and a third connecting portion for connecting to an actuating means, and a second support means having a first connecting portion pivotably connected to the other longitudinal side of the seat frame, a second connecting portion connected to the other of the lateral side wires, and a third connecting portion for connecting to the actuating means. The actuating means, which preferably comprises a Bowden cable, is configured to move the third connecting portions of the first and second support means with respect to each other. This means that, according to the present invention, the wire framework is connected to the seat frame at the two longitudinal sides thereof, i. e. at opposite sides, in a pivotable manner. In addition, the two support means are linked together by means of the actuating means. When the third connecting portions of the support means are moved with respect to each other by means of the actuating means, the support means, which are pivotably mounted to the seat frame, will perform a pivoting motion. The pivoting motion of the support means at the same time results in a movement of the wire framework essentially perpendicular to its support plane or to the plane of the seat frame. Accordingly, the support means serve both for attaching the wire framework to the seat frame and for adjusting the position of the wire framework in a direction perpendicular to its support plane.

Generally, if no other connections of the wire framework to the seat frame are provided, the wire framework will be moved with respect to the seat frame as a whole. However, it is also possible to connect end portions of the lateral side wires of the wire framework to the seat frame. In this case, operation of the actuating means would result in an overall pivoting motion of the wire framework about a transverse axis (if the wire framework is attached to the seat frame at one end) or in an arching of the wire framework (if the wire framework is attached to the seat frame at both ends).

In any case, the present invention provides in an efficient way a solution for attaching the wire framework to the seat frame and for adjusting the degree of lumbar support provided by the lumbar support device.

Preferably, the support means each essentially consist of a wire. In particular, the wire can be formed with different (bent) portions each having a specific direction. It is advantageous to provide the wire in such a manner that wire portions corresponding to the first, second, and/or third connecting portions are directed essentially in parallel to the longitudinal direction of the seat frame, i. e. in parallel to the lateral side wires. By this means, the pivotable connection of the support means to the respective longitudinal side of the seat frame can be accomplished in a very simple and efficient manner. Also the connections to the wire framework and to the actuating means at the second and third connecting portions, respectively, can be configured to provide a rotational degree of freedom in a very simple and efficient manner. Namely, the first connecting portion can be supported in a tubular or semi-tubular extension of the seat frame. The second connecting portion can be connected to a lateral side wire of the wire framework by means of a clip enclosing both the second connecting portion and the respective lateral side wire. Also at the third connecting portion, a rotational degree of freedom can be provided by configuring an attaching member for attaching the actuating means with a tubular or semi-tubular portion which is adapted to receive the third connecting portion of the support means.

Altogether, forming the support means of a wire allows for providing rotational degrees of freedom in a very simple and efficient manner. The support means are thus configured as a lever mechanism which allows for converting the action of the actuating means into the desired movement of the wire framework essentially perpendicular to a support plane.

The wire of the support means is preferably coated with a plastic material. By this means, frictional contact between metal surfaces is effectively eliminated. Consequently, undesired and spurious noise from the lumbar support device can be minimized.

Other characteristics and further advantages of the present invention will be apparent from the following description of a preferred embodiment, which is given in the following by way of example and with reference to the accompanying drawings.

Fig. 1 is a perspective view illustrating a lumbar support device according to an embodiment of the present invention.

Fig. 2a) and b) are transverse sectional views illustrating the operation of the lumbar support device shown in Fig. 1.

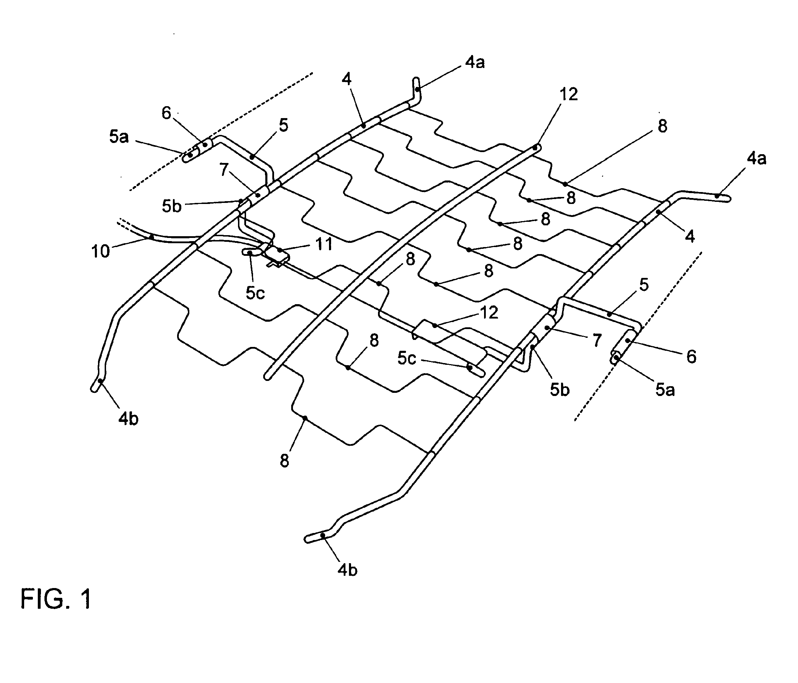

Fig. 1 is a perspective view illustrating an adjustable lumbar support device according to an embodiment of the invention. The lumbar support device comprises a wire framework having two lateral side wires 4 and a plurality of transverse wires 8. The transverse wires 8 are connected to the lateral side wires 4 by being wound around the latter. As shown in Fig. 1, the transverse wires 8 have angled portions extending in the plane of the wire framework, i. e. in a support plane. By means of the angled portions, which in the present embodiment form wire portions of an essentially trapezoidal shape, the wire framework becomes extendable under a load exerted on the seat in a direction perpendicular to its support plane. In addition, it becomes possible to extend or compress the wire framework in a transverse direction, i. e. in the direction of the transverse wires. The transverse wires 8 extend through a center cord 12 or tube of paper or synthetic plastic material which serves to maintain a predefined vertical spacing between the transverse wires 8.

As shown in Fig. 1, the diameter of the transverse wires 8 differs from that of the lateral side wires 4. By this means, on the one hand a suitable stiffness for mounting the wire framework in a seat frame is achieved and, on the other hand, a suitable degree of flexibility is provided.

The wire framework is attached to a seat frame (schematically illustrated by dashed lines) by means of a pair of support means 5. In particular, a first support means 5 connects one longitudinal side of the seat frame with one of the lateral side wires 4, and a second support means 5 connects the other, e.g. opposite, longitudinal side of the seat frame with the other lateral side wire 4.

The support means 5 each essentially consist of a wire having substantially the same diameter as the lateral side wires. The wire is formed into different sections comprising:
- a first connecting portion 5a for pivotably connecting the support means to the respective longitudinal side of the seat frame,
- a second connecting portion 5b for connecting the support means 5 to the respective lateral side wire, and
- a third connecting portion 5c for connecting to an actuating means 10 essentially formed by a Bowden cable.

The connecting portions 5a, 5b, 5c are each provided as wire portions extending essentially in parallel to each other and to the lateral side wires 4. By this means, the corresponding connections to the seat frame, to the wire framework and to the actuating means are in an effective manner provided with a rotational degree of freedom about an axis extending in the longitudinal direction, i. e. in parallel to the lateral side wires 4.

The first connecting portion 5a is connected to the second connecting portion 5b by means of an intermediate portion generally extending both in the transverse direction and in the direction perpendicular to the support plane. The same applies for an intermediate portion connecting the second connecting portion 5b with the third connecting portion 5c. The dimensions of the intermediate portions are selected so as to achieve a suitable lever effect when moving the third connecting portions 5c of the support means with respect to each other, thereby causing movement of the wire framework in a direction perpendicular to its support plane.

The actuating means 10 comprises a Bowden cable which couples the third connecting portions 5c of the two support means 5 with one another. In particular, the outer sheath of the Bowden cable is coupled to a first attaching member 11 which is pivotably connected to the third connecting portion 5c of the first support means 5, and the inner cable or wire of the Bowden cable is connected to a second attaching member 12, which is pivotably connected to the third connecting portion 5c of the second support means 5. Consequently, the third connecting portion 5c of the first and second support means 5 can be pulled toward each other by means of the Bowden cable.

The first connecting portion 5a is coupled to the seat frame by means of a tubular or semi-tubular extension of the seat frame. The tubular or semi-tubular extension of the seat frame extends along the longitudinal direction and is configured to receive the first connecting portion 5a of the support means. For this purpose, the inner diameter of the tubular or semi-tubular extension is equal to or slightly larger than the diameter of the first connecting portion 5a.

In the second connecting portion 5b, the support means 5 is coupled to the respective lateral side wire 4 by means of a clip 7 which encloses both the second connecting portion 5b and the lateral side wire 4.

The first and second attaching members 11, 12 are attached to the third connecting portions 5c of the respective support members by means of a tubular or semi-tubular portion of the respective attaching member 11, 12, the tubular or semi-tubular portion being configured to receive the third connecting portion 5c of the respective support means.

The wires forming the first and second support means 5 are coated with a plastic material. Thereby, frictional contact between metallic surfaces can be avoided and spurious and disturbing noise generated when adjusting the lumbar support device or when exerting a load upon the lumbar support device can be minimized.

Upon operation of the actuating means, the third connecting portions 5c of the support means 5 are pulled toward each other. As the support means 5 are each pivotably connected to the seat frame at their first connecting portions 5a, pulling the third connecting portions 5c toward each other results in a pivoting motion of the support means 5 about the rotational axis defined by the respective first connecting portion 5a.

In a rest state, the support means 5 are arranged and configured in such a manner that the first connecting portions 5a of the support means define a first plane located in front of the wire framework. The second connecting portions are located in the plane of the wire framework, i. e. in the support plane, which is located behind the first plane. The third connecting portions are located in a second plane behind the support plane. When actuating the actuating means, the third connecting portions 5c are moved on a circular arc and thereby also in a direction perpendicular to the support plane until they have reached the plane of the first connecting portions 5a. In this state, a minimal transverse distance between the third connecting portions is reached. At the same time, the second connecting portions 5b which are attached to the wire framework are moved in a direction essentially perpendicular to the support plane. Consequently, the wire framework as a whole can be moved in a direction perpendicular to the support plane by the action of the Bowden cable.

If the wire framework is connected to the seat frame only by means of the support means 5, the wire framework is moved as a whole by the action of the actuating means. Of course, it is also possible to provide additional coupling of the wire framework to the seat frame. This can, for example, be accomplished at end portions 4a, 4b of the lateral side wires. By coupling the wire framework to the seat frame at one (upper or lower) side, e. g. by coupling either the upper end portions 4a or the lower end portions 4b to the seat frame, a pivoting motion of the entire wire framework upon actuating the actuating means is achieved. In case the wire framework is connected to the seat frame at both the upper end portions 4a and the lower end portions 4b of the lateral side wires, actuating the actuating means 10 results in an arching of the wire framework along its longitudinal axis. Therefore, the above described adjusting mechanism can be used to implement different types of adjustment, including displacing the entire support plane, pivoting the support plane or arching the wire framework.

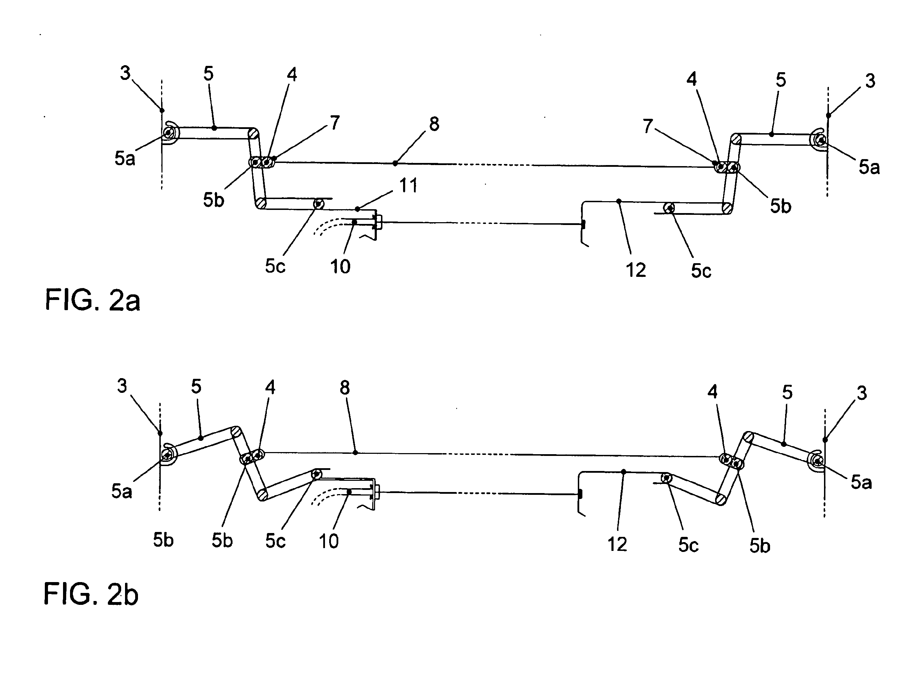

The operation of the lumbar support device of the present invention is further illustrated in the cross sectional views of Fig. 2a) and b). In these Figures, the seat frame is denoted by reference numeral 3.

Fig. 2a) shows the lumbar support device in a first state. As can be seen, the first connecting portions 5a are situated in a first plane above or in front of the support plane (indicated by the position of the transverse wire denoted by 8). The third connecting portions 5c are situated in a second plane located below or behind the support plane.

The support means 5 are formed in such a manner that the third connecting portions 5c are spaced from the wire framework by a sufficient distance so as to provide the necessary freedom of movement for the third connecting portions 5 to be moved toward the plane of the first connecting portions 5a.

Fig. 2b) shows a second state of the lumbar support device in which the third connecting portions 5c of the support means 5 have been pulled closer together as compared to the state shown in Fig. 2a). As can be seen, pulling the third connecting portions 5c closer together is accompanied by a pivoting motion of the support means 5. A pivoting motion of the support means 5 at the same time moves the plane of the wire framework in a direction essentially perpendicular to the support plane. Consequently, the degree of lumbar support provided by the wire framework can be adjusted by means of the actuating means 10.

So far, it has not been taken into account that the second connecting portions are not only moved in a direction perpendicular to the support plane, but also in a direction parallel thereto, as they generally move on a circular arc. However, the component of movement in parallel to the support plane is preferably reduced by configuring the support means 5 in such a manner that, in the typical range of operation, the second connecting portions 5b are situated essentially in the plane of the first connecting portion 5a or in proximity thereto. In this case, the component of movement of the second connecting portions 5b in parallel to the support plane vanishes and the second connecting portions are moved essentially only perpendicular to the support plane. In addition, a slight movement of the second connecting portions 5b in parallel to the support plane can be compensated by the flexibility of the wire framework. Moreover, in some cases a slight arching of the wire framework in response to movement of the second connecting portions 5b in parallel to the support plane may be desirable.

For the third connecting portions 5c it is, however, advantageous to provide a relatively large distance to the plane of the first connecting portions 5a. By this means, a larger range of adjustment is achieved, as the third connecting portions 5c can travel a longer distance before they reach the plane of the first connecting portions 5a.

As can be seen from Fig. 2a) and b), the shape of the support means 5 define the radial positions of the second and third connecting portions 5b, 5c with respect to the rotational axis formed by the first connecting portion 5a. In addition, a relative angular position of the second and third connecting portions 5b, 5c is defined. The radial and relative angular positions may be selected and optimized according to the specific configuration of the lumbar support device and the desired range of adjustment.

## Claims

1. A lumbar support device comprising:
- a wire framework for incorporation into a seat frame (3), the wire framework having two lateral side wires (4) and a plurality of transverse wires (8); and
- an adjusting mechanism configured for adjusting the degree of lumbar support provided by the lumbar support device, the adjusting mechanism comprising:
- a first support means (5) having a first connecting portion (5a) for pivotably connecting to one longitudinal side of the seat frame (3), a second connecting portion (5b) connected to one of the lateral side wires (4), and a third connecting portion (5c) for connecting to an actuating means (10); and
- a second support means (5) having a first connecting portion (5a) for pivotably connecting to another longitudinal side of the seat frame (3), a second connecting portion connected to another of the lateral side wires (4), and a third connecting portion (5c) for connecting to the actuating means (10);
wherein the actuating means is configured to move the thirds connecting portions of the first and second support means (5) with respect to each other,
**characterized in that**
the frst and second support means (5) are configured in such a manner that, in a rest state of the lumbar support device, the first connecting portions (5a) are located in a first plane in front of the wire framework, the second connecting portions (5b) are located in the plane of the wire framework, and the third connecting portions (5c) are located behind the plane of the wire framework.

2. A lumbar support device according to claim 1,
**characterized in that**
the first and second support means (5) each essentially consist of a wire.

3. A lumbar support device according to claim 2,
**characterized in that**
the wire extends essentially in parallel to the lateral side wires (4) in the first, second and/or third connecting portions (5a, 5b, 5c).

4. A lumbar support device according to claim 2 or claim 3,
**characterized in that**
the wire is coated with a plastic material.

5. A lumbar support device according to any one of the preceding claims,
**characterized in that**
the first and second support means (5) are each connected to the respective lateral side wire (4) by means of a clip (7) enclosing both the lateral side wire (4) and the second connecting portion (5b) of the support means (5).

6. A lumbar support device according to any one of the preceding claims,
**characterized in that**
the actuating means (10) comprises a Bowden cable.

7. A lumbar support device according to any one of the preceding claims,
**characterized in that**
the lateral side wires (4) are connected to the seat frame (3) at at least one of their end portions.

8. A lumbar support device according to any one of the preceding claims,
**characterized in that**
the wire framework is configured to provide support for upholstery of a backrest of a seat.

## Patentansprüche

1. Lordosenstützvorrichtung, umfassend:
- ein Drahtgestell zum Einbau in einen Sitzrahmen (3), wobei das Drahtgestell zwei laterale Seitendrähte (4) und mehrere Querdrähte (8) aufweist; und
- einen Einstellmechanismus, welcher zum Einstellen des durch die Lordosenstützvorrichtung bereitgestellten Grads an Lordosenstützung ausgestaltet ist, wobei der Einstellmechanismus umfasst:
- ein erstes Stützmittel (5) mit einem ersten Verbindungsabschnitt (5a) zum schwenkbaren Verbinden mit einer Längsseite des Sitzrahmens (3), einem mit einem der lateralen Seitendrähte (4) verbundenen zweiten Verbindungsabschnitt (5b) und einem dritten Verbindungsabschnitt (5c) zum Verbinden mit einem Betätigungsmittel (10); und
- ein zweites Stützmittel (5) mit einem ersten Verbindungsabschnitt (5a) zum schwenkbaren Verbinden mit einer anderen Längsseite des Sitzrahmens (3), einem mit einem anderen der lateralen Seitendrähte (4) verbundenen zweiten Verbindungsabschnitt und einem dritten Verbindungsabschnitt (5c) zum Verbinden mit dem Betätigungsmittel (10);
wobei das Betätigungsmittel zum Bewegen des dritten Verbindungsabschnitts des ersten und zweiten Stützmittels (5) in Bezug aufeinander ausgestaltet ist,
**dadurch gekennzeichnet,**
**dass** die ersten und zweiten Stützmittel (5) derart ausgestaltet sind, dass in einem Ruhezustand der Lordosenstützvorrichtung die ersten Verbindungsabschnitte (5a) in einer ersten Ebene vor dem Drahtgestell, die zweiten Verbindungsabschnitte (5b) in der Ebene des Drahtgestells und die dritten Verbindungsabschnitte (5c) hinter der Ebene des Drahtgestells angeordnet sind.

2. Lordosenstützvorrichtung nach Anspruch 1,
**dadurch gekennzeichnet,**
**dass** die ersten und zweiten Stützmittel (5) jeweils im Wesentlichen aus einem Draht bestehen.

3. Lordosenstützvorrichtung nach Anspruch 2,
**dadurch gekennzeichnet,**
**dass** der Draht im Wesentlichen parallel zu den lateralen Seitendrähten (4) in den ersten, zweiten und/oder dritten Verbindungsabschnitten (5a, 5b, 5c) verläuft.

4. Lordosenstützvorrichtung nach Anspruch 2 oder Anspruch 3,
**dadurch gekennzeichnet,**
**dass** der Draht mit einem Kunststoffmaterial beschichtet ist.

5. Lordosenstützvorrichtung nach einem der vorhergehenden Ansprüche,
**dadurch gekennzeichnet,**
**dass** die ersten und zweiten Stützmittel (5) jeweils mit dem entsprechenden lateralen Seitendraht (4) mittels eines Clips (7) verbunden sind, welcher sowohl den lateralen Seitendraht (4) als auch den zweiten Verbindungsabschnitt (5b) des Stützmittels (5) umgreift.

6. Lordosenstützvorrichtung nach einem der vorhergehenden Ansprüche,
**dadurch gekennzeichnet,**
**dass** das Betätigungsmittel (10) einen Bowdenzug umfasst.

7. Lordosenstützvorrichtung nach einem der vorhergehenden Ansprüche,
**dadurch gekennzeichnet,**
**dass** die lateralen Seitendrähte (4) an wenigstens einem ihrer Endabschnitte mit dem Sitzrahmen (3) verbunden sind.

8. Lordosenstützvorrichtung nach einem der vorhergehenden Ansprüche,
**dadurch gekennzeichnet,**
**dass** das Drahtgestell als Unterstützung für Polsterung einer Rückenlehne eines Sitzes ausgestaltet ist.

## Revendications

1. Dispositif de support lombaire, comprenant :
un cadre de fils destiné à être incorporé dans un châssis de siège (3), le cadre de fils ayant deux fils latéraux (4) et une pluralité de fils transversaux (8) ; et
un mécanisme d'ajustement configuré pour ajuster le degré de support lombaire proposé par le dispositif de support lombaire, le mécanisme d'ajustement comprenant :
des premiers moyens de support (5) ayant une première partie de raccordement (5a) pour se raccorder de manière pivotante à un côté longitudinal du châssis de siège (3), une deuxième partie de raccordement (5b) raccordée à l'un des fils latéraux (4) et une troisième partie de raccordement (5c) pour le raccordement aux moyens d'actionnement (10) ; et
des seconds moyens de support (5) ayant une première partie de raccordement (5a) pour le raccordement pivotant à un autre côté longitudinal du châssis de siège (3), une deuxième partie de raccordement raccordée à un autre des fils latéraux (4), et une troisième partie de raccordement (5c) pour le raccordement aux moyens d'actionnement (10) ;
dans lequel les moyens d'actionnement sont configurés pour déplacer les troisièmes parties de raccordement des premiers et seconds moyens de support (5) les unes par rapport aux autres,
**caractérisé en ce que :**
les premiers et seconds moyens de support (5) sont configurés de sorte qu'à l'état de repos du dispositif de support lombaire, les premières parties de raccordement (5a) sont positionnées dans un premier plan en face du cadre de fils, les deuxièmes parties de raccordement (5b) sont positionnées dans le plan du châssis de fil, et les troisièmes parties de raccordement (5c) sont positionnées derrière le plan du cadre de fils.

2. Dispositif de support lombaire, selon la revendication 1, **caractérisé en ce que** les premiers et seconds moyens de support (5) se composent chacun essentiellement d'un fil.

3. Dispositif de support lombaire selon la revendication 2, **caractérisé en ce que** le fil s'étend essentiellement parallèlement aux fils latéraux (4) dans les première, deuxième et/ou troisième parties de raccordement (5a, 5b, 5c).

4. Dispositif de support lombaire selon la revendication 2 ou la revendication 3, **caractérisé en ce que** le fil est recouvert avec une matière plastique.

5. Dispositif de support lombaire selon l'une quelconque des revendications précédentes, **caractérisé en ce que** les premiers et seconds moyens de support (5) sont chacun raccordés au fil latéral (4) respectif au moyen d'une pince (7) enfermant à la fois le fil latéral (4) et la deuxième partie de raccordement (5b) des moyens de support (5).

6. Dispositif de support lombaire selon l'une quelconque des revendications précédentes, **caractérisé en ce que** les moyens d'actionnement (10) comprennent un câble Bowden.

7. Dispositif de support lombaire selon l'une quelconque des revendications précédentes, **caractérisé en ce que** les fils latéraux (4) sont raccordés au châssis de siège (3) au moins au niveau de l'une de leurs parties d'extrémité.

8. Dispositif de support lombaire selon l'une quelconque des revendications précédentes, **caractérisé en ce que** le cadre de fils est configuré pour fournir le support pour la garniture d'un dossier d'un siège.
